# EUROPEAN PATENT APPLICATION

(11) **EP 4 303 538 A1**
(43) Date of publication of application: **10.01.2024**
(21) Application number: 23184309.5
(22) Date of filing: 07.07.2023
(51) Int. Cl.: G01C 21/34, B60W 60/00, G05D 1/02, G08G 1/0968

(54) **SYSTEM AND METHOD FOR AN OPTIMIZED ROUTING OF AUTONOMOUS VEHICLES WITH RISK AWARE MAPS**

(30) Priority: 08.07.2022 US 202263359667 P
(71) Applicant: TuSimple, Inc., San Diego, CA 92122 (US)
(72) Inventor: POORSARTEP, Mohammad, Los Gatos (US)
(74) Representative: Hamer, Thomas Daniel

(57) **Abstract**

An autonomous vehicle (AV) route planning system and method comprising receiving data indicating a risk on each road segments of a road network, generating a risk aware map of the road network having a dynamic risk layer determined by the received data on each of the road segments of the road network, generating a set of feasible routes between an origin and destination, selecting an optimal route from the set of feasible routes, and transmitting the optimal route to the AV, where the every route in the set of feasible route has an overall risk below a predetermined risk level specified by an oversight system or a third-party. The autonomous vehicle may operate in conjunction with an oversight system, such as when coordinating a fleet of autonomous vehicles.

## Description

### TECHNICAL FIELD

The present disclosure relates generally to autonomous vehicles. More particularly, the present disclosure is related to operating an autonomous vehicle (AV) appropriately in an uncertain dynamic environments.

### BACKGROUND

One aim of autonomous vehicle technologies is to provide vehicles that can safely navigate towards a destination with limited or no driver assistance. The safe navigation of an autonomous vehicle (AV) from one point to another may include the ability to signal other vehicles, navigating around other vehicles in shoulders or emergency lanes, changing lanes, biasing appropriately in a lane, and navigate all portions or types of highway lanes. Autonomous vehicle technologies may enable an AV to operate without requiring extensive learning or training by surrounding drivers, by ensuring that the AV can operate safely, in a way that is evident, logical, or familiar to surrounding drivers and pedestrians.

### SUMMARY

Systems and methods are described herein that allow an autonomous vehicle (AV) to navigate from a first point to a second point without a human driver present in the AV and to generate an optimal risk aware path based on the risk map and a cost criteria selected by the oversight system or a third party requesting the AV to navigate from the first point to the second point.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
FIG. 1 illustrates a schematic diagram of a system including an autonomous vehicle;
FIG. 2 shows a flow diagram for operation of an autonomous vehicle (AV) safely in light of the health and surroundings of the AV; and
FIG. 3 illustrates a system that includes one or more autonomous vehicles, a control center or oversight system with a human operator (e.g., a remote center operator (RCO)), and an interface for third-party interaction.
FIG. 4 illustrates an intelligent vehicular road network of highway, arterial and urban roads with dynamics risks indicators and autonomous vehicles.
FIG. 5 illustrates a two dimensional road map with a dynamic risk layer.
FIG. 6 illustrates an undirected graph modeling the two dimensional road network with the dynamic risk layer and feasible routes.
FIG. 7 illustrates a flowchart for the optimal route based on the risk aware map of the road network.

### DETAILED DESCRIPTION

Vehicles traversing highways and roadways are legally required to comply with regulations and statues in the course of safe operation of the vehicle. For autonomous vehicles (AVs), particularly autonomous tractor trailers, the ability to recognize and avoid high risk areas are necessary for safe operation of the vehicle. Described below in detail are systems and methods for the generation of risk aware feasible routes in the dynamically changing environment on an intelligent road network roadway, including the execution of maneuvers that bring the autonomous vehicle to follow the generated trajectory, while signaling surrounding vehicles and the infrastructure systems of its state as well as the neighboring environment's conditions.

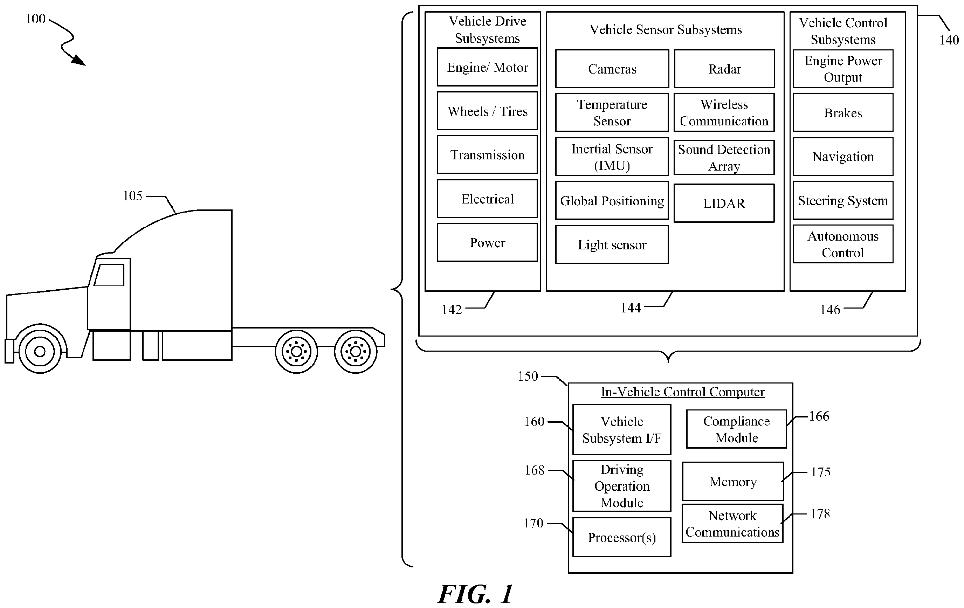

FIG. 1 shows a system 100 that includes a tractor 105 of an autonomous truck. The tractor 105 includes a plurality of vehicle subsystems 140 and an in-vehicle control computer 150. The plurality of vehicle subsystems 140 includes vehicle drive subsystems 142, vehicle sensor subsystems 144, and vehicle control subsystems. An engine or motor, wheels and tires, a transmission, an electrical subsystem, and a power subsystem may be included in the vehicle drive subsystems. The engine of the autonomous truck may be an internal combustion engine, a fuel-cell powered electric engine, a battery powered electrical engine, a hybrid engine, or any other type of engine capable of moving the wheels on which the tractor 105 moves. The tractor 105 have multiple motors or actuators to drive the wheels of the vehicle, such that the vehicle drive subsystems 142 include two or more electrically driven motors. The transmission may include a continuous variable transmission or a set number of gears that translate the power created by the engine into a force that drives the wheels of the vehicle. The vehicle drive subsystems may include an electrical system that monitors and controls the distribution of electrical current to components within the system, including pumps, fans, and actuators. The power subsystem of the vehicle drive subsystem may include components that regulate the power source of the vehicle.

Vehicle sensor subsystems 144 can include sensors for general operation of the autonomous truck 105, including those which would indicate a malfunction in the AV or another cause for an AV to perform a limited or minimal risk condition (MRC) maneuver. The sensors for general operation of the autonomous vehicle may include cameras, a temperature sensor, an inertial sensor (IMU), a global positioning system, a light sensor, a LIDAR system, a radar system, and wireless communications.

A sound detection array, such as a microphone or array of microphones, may be included in the vehicle sensor subsystem 144. The microphones of the sound detection array are configured to receive audio indications of the presence of, or instructions from, authorities, including sirens and command such as "Pull over." These microphones are mounted, or located, on the external portion of the vehicle, specifically on the outside of the tractor portion of an autonomous truck 105. Microphones used may be any suitable type, mounted such that they are effective both when the autonomous truck 105 is at rest, as well as when it is moving at normal driving speeds.

Cameras included in the vehicle sensor subsystems 144 may be rear-facing so that flashing lights from emergency vehicles may be observed from all around the autonomous truck 105. These cameras may include video cameras, cameras with filters for specific wavelengths, as well as any other cameras suitable to detect emergency vehicle lights based on color, flashing, of both color and flashing.

The vehicle control subsystem 146 may be configured to control operation of the autonomous vehicle, or truck, 105 and its components. Accordingly, the vehicle control subsystem 146 may include various elements such as an engine power output subsystem, a brake unit, a navigation unit, a steering system, and an autonomous control unit. The engine power output may control the operation of the engine, including the torque produced or horsepower provided, as well as provide control the gear selection of the transmission. The brake unit can include any combination of mechanisms configured to decelerate the autonomous vehicle 105. The brake unit can use friction to slow the wheels in a standard manner. The brake unit may include an Anti-lock brake system (ABS) that can prevent the brakes from locking up when the brakes are applied. The navigation unit may be any system configured to determine a driving path or route for the autonomous vehicle 105. The navigation unit may additionally be configured to update the driving path dynamically while the autonomous vehicle 105 is in operation. In some embodiments, the navigation unit may be configured to incorporate data from the GPS device and one or more predetermined maps so as to determine the driving path for the autonomous vehicle 105. The steering system may represent any combination of mechanisms that may be operable to adjust the heading of autonomous vehicle 105 in an autonomous mode or in a driver-controlled mode.

The autonomous control unit may represent a control system configured to identify, evaluate, and avoid or otherwise negotiate potential obstacles in the environment of the autonomous vehicle 105. In general, the autonomous control unit may be configured to control the autonomous vehicle 105 for operation without a driver or to provide driver assistance in controlling the autonomous vehicle 105. In some embodiments, the autonomous control unit may be configured to incorporate data from the GPS device, the RADAR, the LiDAR (i.e. LIDAR), the cameras, and/or other vehicle subsystems to determine the driving path or trajectory for the autonomous vehicle 105. The autonomous control that may activate systems that the AV 105 has which are not present in a conventional vehicle, including those systems which can allow an AV to communicate with surrounding drivers or signal surrounding vehicles or drivers for safe operation of the AV.

Optionally, the vehicle control subsystem 146 may be configured to control operation of the autonomous vehicle, or truck, 105 and its components based on received optimal routing instructions. An optimal route may be determined, and elements of the vehicle control subsystem 146 controlled such that the optimal route is followed. For example, the optimal route may be one that satisfies a predetermined risk level. In some implementations, it may meet one or more priorities such as travel time or fuel efficiency of the journey.

An in-vehicle control computer 150, which may be referred to as a VCU, includes a vehicle subsystem interface 160, a driving operation module 168, one or more processors 170, a compliance module 166, a memory 175, and a network communications subsystem 178. This in-vehicle control computer 150 controls many, if not all, of the operations of the autonomous truck 105 in response to information from the various vehicle subsystems 140. The one or more processors 170 execute the operations that allow the system to determine the health of the AV, such as whether the AV has a malfunction or has encountered a situation requiring service or a deviation from normal operation and giving instructions. Data from the vehicle sensor subsystems 144 is provided to VCU 150 so that the determination of the status of the AV can be made. The compliance module 166 determines what action should be taken by the autonomous truck 105 to operate according to the applicable (i.e. local) regulations. Data from other vehicle sensor subsystems 144 may be provided to the compliance module 166 so that the best course of action in light of the AV's status may be appropriately determined and performed. Alternatively, or additionally, the compliance module 166 may determine the course of action in conjunction with another operational or control module, such as the driving operation module 168.

The memory 175 may contain additional instructions as well, including instructions to transmit data to, receive data from, interact with, or control one or more of the vehicle drive subsystem 142, the vehicle sensor subsystem 144, and the vehicle control subsystem 146 including the autonomous Control system. The in-vehicle control computer (VCU) 150 may control the function of the autonomous vehicle 105 based on inputs received from various vehicle subsystems (e.g., the vehicle drive subsystem 142, the vehicle sensor subsystem 144, and the vehicle control subsystem 146). Additionally, the VCU 150 may send information to the vehicle control subsystems 146 to direct the trajectory, velocity, signaling behaviors, and the like, of the autonomous vehicle 105. The autonomous control vehicle control subsystem may receive a course of action to be taken from the compliance module 166 of the VCU 150 and consequently relay instructions to other subsystems to execute the course of action.

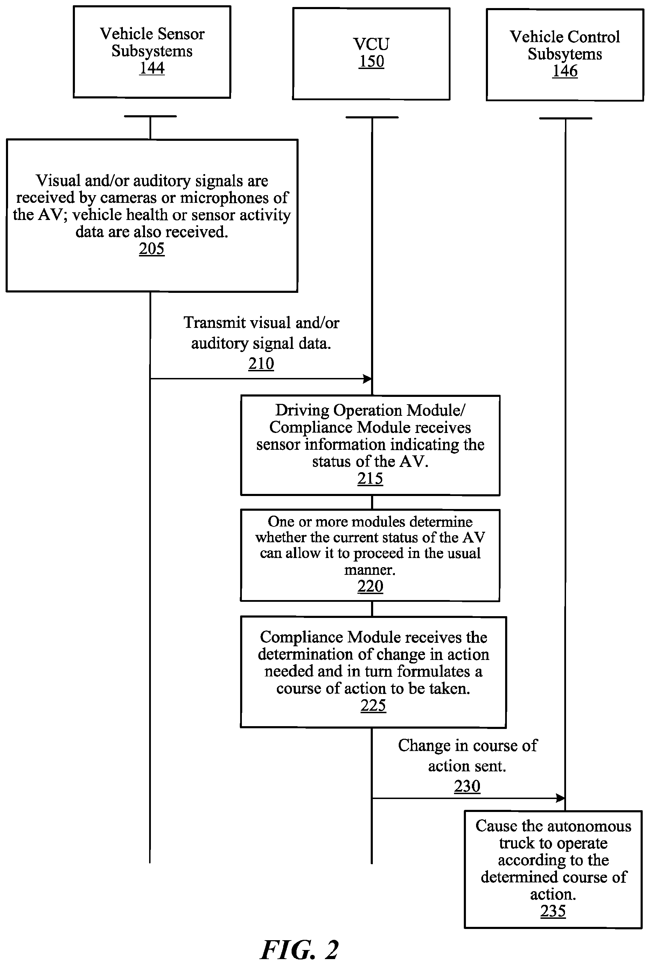

FIG. 2 shows a flow diagram for operation of an autonomous vehicle (AV) safely in light of the health and surroundings of the AV. Although this figure depicts functional steps in a particular order for purposes of illustration, the process is not limited to any particular order or arrangement of steps. One skilled in the relevant art will appreciate that the various steps portrayed in this figure could be omitted, rearranged, combined and/or adapted in various ways.

As shown in FIG. 2, the vehicle sensor subsystem 144 receives visual, auditory, or both visual and auditory signals indicating the environmental condition of the AV, as well as vehicle health or sensor activity data are received in step 205. These visual and/or auditory signal data are transmitted from the vehicle sensor subsystem 144 to the in-vehicle control computer system (VCU) 150, as in step 210. Any of the driving operation module and the compliance module receive the data transmitted from the vehicle sensor subsystem, in step 215. Then, one or both of those modules determine whether the current status of the AV can allow it to proceed in the usual manner or that the AV needs to alter its course to prevent damage or injury or to allow for service in step 220. The information indicating that a change to the course of the AV is needed may include an indicator of sensor malfunction; an indicator of a malfunction in the engine, brakes, or other components necessary for the operation of the autonomous vehicle; a determination of a visual instruction from authorities such as flares, cones, or signage; a determination of authority personnel present on the roadway; a determination of a law enforcement vehicle on the roadway approaching the autonomous vehicle, including from which direction; and a determination of a law enforcement or first responder vehicle moving away from or on a separate roadway from the autonomous vehicle. This information indicating that a change to the AV's course of action is needed may be used by the compliance module to formulate a new course of action to be taken which accounts for the AV's health and surroundings, in step 225. The course of action to be taken may include slowing, stopping, moving into a shoulder, changing route, changing lane while staying on the same general route, and the like. The course of action to be taken may include initiating communications with any oversight or human interaction systems present on the autonomous vehicle. The course of action to be taken may then be transmitted from the VCU 150 to the autonomous control system, in step 230. The vehicle control subsystems 146 then cause the autonomous truck 105 to operate in accordance with the course of action to be taken that was received from the VCU 150 in step 235.

It should be understood that the specific order or hierarchy of steps in the processes disclosed herein is an example of exemplary approaches. Based upon design preferences, it is understood that the specific order or hierarchy of steps in the processes may be rearranged while remaining within the scope of the present disclosure. The accompanying method claims present elements of the various steps in a sample order, and are not meant to be limited to the specific order or hierarchy presented.

### Autonomous Truck Oversight System

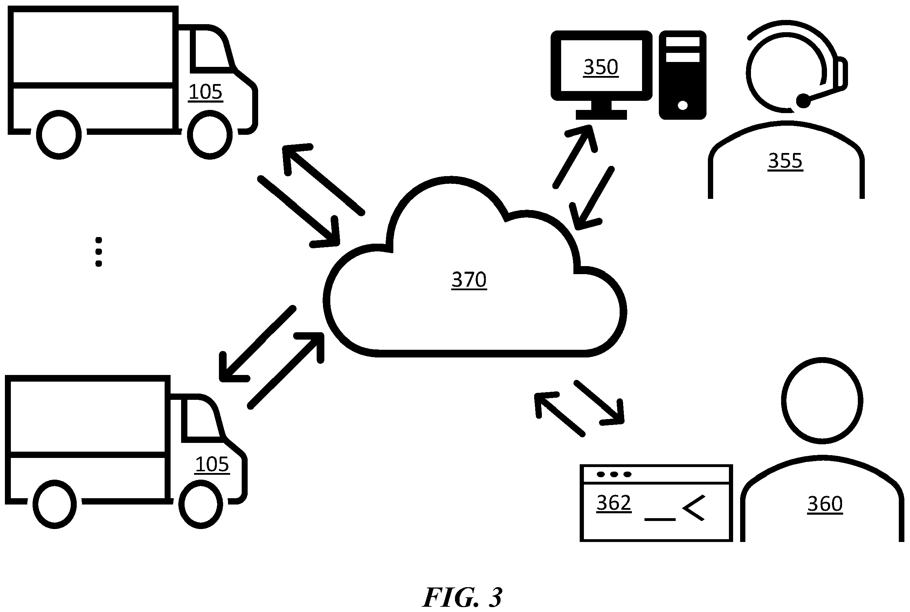

FIG. 3 illustrates a system 300 that includes one or more autonomous vehicles 105, a control center or oversight system 350 with a human operator 355, and an interface 362 for third-party 360 interaction. A human operator 355 may also be known as a remoter center operator (RCO). Communications between the autonomous vehicles 105, oversight system 350 and user interface 362 take place over a network 370. In some instances, where not all the autonomous vehicles 105 in a fleet are able to communicate with the oversight system 350, the autonomous vehicles 105 may communicate with each other over the network 370 or directly. As described with respect to FIG. 1, the VCU 150 of each autonomous vehicle 105 may include a module for network communications 178.

An autonomous truck may be in communication with an oversight system. The oversight system may serve many purposes, including: tracking the progress of one or more autonomous vehicles (e.g., an autonomous truck); tracking the progress of a fleet of autonomous vehicles; sending maneuvering instructions to one or more autonomous vehicles; monitoring the health of the autonomous vehicle(s); monitoring the status of the cargo of each autonomous vehicle in contact with the oversight system; facilitate communications between third parties (e.g., law enforcement, clients whose cargo is being carried) and each, or a specific, autonomous vehicle; allow for tracking of specific autonomous trucks in communication with the oversight system (e.g., third-party tracking of a subset of vehicles in a fleet); arranging maintenance service for the autonomous vehicles (e.g., oil changing, fueling, maintaining the levels of other fluids); alerting an affected autonomous vehicle of changes in traffic or weather that may adversely impact a route or delivery plan; pushing over the air updates to autonomous trucks to keep all components up to date; and other purposes or functions that improve the safety for the autonomous vehicle, its cargo, and its surroundings. An oversight system may also determine performance parameters of an autonomous vehicle or autonomous truck, including any of: data logging frequency, compression rate, location, data type; communication prioritization; how frequently to service the autonomous vehicle (e.g., how many miles between services); when to perform a minimal risk condition (MRC) maneuver while monitoring the vehicle's progress during the maneuver; when to hand over control of the autonomous vehicle to a human driver (e.g., at a destination yard); ensuring an autonomous vehicle passes pre-trip inspection; ensuring an autonomous vehicle performs or conforms to legal requirements at checkpoints and weight stations; ensuring an autonomous vehicle performs or conforms to instructions from a human at the site of a roadblock, cross-walk, intersection, construction, or accident; and the like.

In some embodiments, the oversight system 350 may be configured to generate a risk aware routes, which have aggregate risk levels below a global predetermined risk level or local risk levels on each segment of the generated routes below a local predetermined risk level. In various embodiments, the oversight system 350 may select a risk aware route that satisfy the global or local predetermined risk level and, in addition, it may also prioritize the travel time or the fuel efficiency of the trip. Moreover, oversight system 350 may generate routes satisfying the third party's risk requirements as well its desired time of arrival at the destination. In some embodiments, the customer's desired arrival time may be specified as a one or more time windows. The customer requesting the trip may be a customer whose goods the AV is requested to transport.

In some embodiments, the oversight system 350 may generate the risk aware routes based on the risk map maintained by the oversight system. The risk map may be implemented as a database storing risk levels on road segments and intersections comprising the road network. In some embodiments the risk map may be localized to a region of interest (e.g., county or state) that encompasses the one or more origin destination pairs. The risk map, according to some embodiments, may include markers or other indicators depicting areas, intersections, streets, or routes which have various risk levels. In some embodiments, the risk levels may indicate the severity of collision probability based on historic data, temporary lane closures, construction work, probability of unfavorable weather conditions, a severity of theft probability, etc. The oversight system 350 may update the risk map based on the information received from the environmental sensors or other AV approaching a segment of the road network.

To allow for communication between autonomous vehicles in a fleet and an oversight system or command center, each autonomous vehicle may be equipped with a communication gateway. The communication gateway may have the ability to do any of the following: allow for AV to oversight system communication (i.e. V2C) and the oversight system to AV communication (C2V); allow for AV to AV communication within the fleet (V2V); transmit the availability or status of the communication gateway; acknowledge received communications; ensure security around remote commands between the AV and the oversight system; convey the AV's location reliably at set time intervals; enable the oversight system to ping the AV for location and vehicle health status; allow for streaming of various sensor data directly to the command or oversight system; allow for automated alerts between the AV and oversight system; comply to ISO 21434 standards; and the like.

An oversight system or command center may be operated by one or more human, also known as an operator or a remote center operator (RCO). The operator may set thresholds for autonomous vehicle health parameters, so that when an autonomous vehicle meets or exceeds the threshold, precautionary action may be taken. Examples of vehicle health parameters for which thresholds may be established by an operator may include any of: fuel levels; oil levels; miles traveled since last maintenance; low tire-pressure detected; cleaning fluid levels; brake fluid levels; responsiveness of steering and braking subsystems; Diesel exhaust fluid (DEF) level; communication ability (e.g., lack of responsiveness); positioning sensors ability (e.g., GPS, IMU malfunction); impact detection (e.g., vehicle collision); perception sensor ability (e.g., camera, LIDAR, radar, microphone array malfunction); computing resources ability (e.g., VCU or ECU malfunction or lack of responsiveness, temperature abnormalities in computing units); angle between a tractor and trailer in a towing situation (e.g., tractor-trailer, 18-wheeler, or semi-truck); unauthorized access by a living entity (e.g., a person or an animal) to the interior of an autonomous truck; and the like. The precautionary action may include execution of a minimal risk condition (MRC) maneuver, seeking service, or exiting a highway or other such re-routing that may be less taxing on the autonomous vehicle. An autonomous vehicle whose system health data meets or exceeds a threshold set at the oversight system or by the operator may receive instructions that are automatically sent from the oversight system to perform the precautionary action.

The operator may be made aware of situations affecting one or more autonomous vehicles in communication with or being monitored by the oversight system that the affected autonomous vehicle(s) may not be aware of. Such situations may include: irregular or sudden changes in traffic flow (e.g., traffic jam or accident); abrupt weather changes; abrupt changes in visibility; emergency conditions (e.g., fire, sink-hole, bridge failure); power outage affecting signal lights; unexpected road work; large or ambiguous road debris (e.g., object unidentifiable by the autonomous vehicle); law enforcement activity on the roadway (e.g., car chase or road clearing activity); and the like. These types of situations that may not be detectable by an autonomous vehicle may be brought to the attention of the oversight system operator through traffic reports, law enforcement communications, data from other vehicles that are in communication with the oversight system, reports from drivers of other vehicles in the area, and similar distributed information venues. An autonomous vehicle may not be able to detect such situations because of limitations of sensor systems or lack of access to the information distribution means (e.g., no direct communication with weather agency). An operator at the oversight system may push such information to affected autonomous vehicles that are in communication with the oversight system. The affected autonomous vehicles may proceed to alter their route, trajectory, or speed in response to the information pushed from the oversight system. In some instances, the information received by the oversight system may trigger a threshold condition indicating that MRC (minimal risk condition) maneuvers are warranted; alternatively, or additionally, an operator may evaluate a situation and determine that an affected autonomous vehicle should perform a MRC maneuver and subsequently send such instructions to the affected vehicle. In these cases, each autonomous vehicle receiving either information or instructions from the oversight system or the oversight system operator uses its on-board computing unit (i.e. VCU) to determine how to safely proceed, including performing a MRC maneuver that includes pulling-over or stopping.

An oversight system or command center may allow a third party to interact with the oversight system operator, with an autonomous truck, or with both the human system operator and an autonomous truck. A third party may be a customer whose goods are being transported, a law enforcement or emergency services provider, or a person assisting the autonomous truck when service is needed. In its interaction with a third party, the oversight system may recognize different levels of access, such that a customer concerned about the timing or progress of a shipment may only be allowed to view status updates for an autonomous truck, or may able to view status and provide input regarding what parameter(s) to prioritize (e.g., speed, fuel economy, travel time, desired time of arrival, maintaining originally planned route) to the oversight system. Moreover, the third party may adjust the global or local predetermined risk level to achieve a more favorable route that meets the prioritized trip parameters. As such, the third party may increase the global or local predetermined risk level if there is enough headroom to meet the prioritized trip parameter(s) such as fuel economy, travel time, or the desired time of arrival. If, given the risk map, no route meets the third party's the prioritized trip parameter(s), the third party may lower the acceptable global or local predetermined risk level in order to meet the prioritized trip parameter(s). Thereby, by providing input regarding parameter prioritization and the global or local predetermined risk level to the oversight system, a customer can influence the route and/or operating parameters of the autonomous truck.

### Features of an Autonomous Driving System in an Autonomous Truck

Actions that an autonomous vehicle, particularly an autonomous truck, as described herein may be configured to execute to safely traverse a course while abiding by the applicable rules, laws, and regulations may include those actions successfully accomplished by an autonomous truck driven by a human. These actions, or maneuvers, may be described as features of the truck, in that these actions may be executable programming stored on the VCU 150 (i.e., the in-vehicle control computer unit). These actions or features may include those related to reactions to the detection of certain types of conditions or objects such as: appropriate motion in response to detection of an emergency vehicle with flashing lights; appropriate motion in response to detecting one or more vehicles approaching the AV, motions or actions in response to encountering an intersection; execution of a merge into traffic in an adjacent lane or area of traffic; detection of need to clean one or more sensor and the cleaning of the appropriate sensor; and the like. Other features of an autonomous truck may include those actions or features which are needed for any type of maneuvering, including that needed to accomplish the features or actions that are reactionary, listed above. Such features, which may be considered supporting features, may include: the ability to maintain an appropriate following distance; the ability to turn right and left with appropriate signaling and motion, and the like. These supporting features, as well as the reactionary features listed above, may include controlling or altering the steering, engine power output, brakes, or other vehicle control subsystems 146.

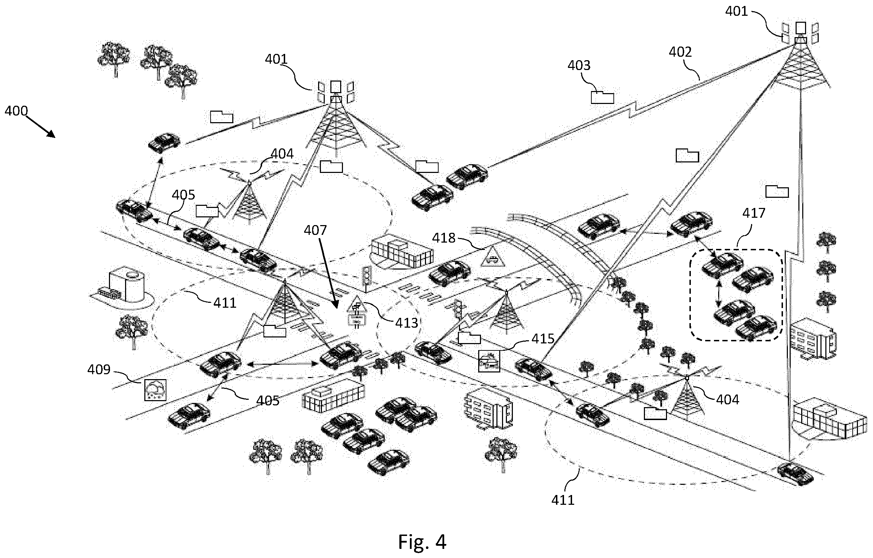

Features of some embodiments will now be described by referring to Fig. 4, where an intelligent road network 400 for facilitating AVs operation, control, dynamic environment sensing, vehicle-to-vehicle (V2V) communication 405, and vehicle-to-infrastructure (V2I) communication 402 is illustrated, in accordance to some embodiments. In some embodiments, the intelligent road network 400 may include various risk indicators associated with uncertain dynamical environment on a segment of the intelligent road network 400. For example, on some segments of the road network 400, an indicator for risky weather conditions 409 may be present. In some embodiments, the risk associated with the weather conditions may be based on a real time, historical, or forecasted date. In some embodiments, the risk indicator 409 may be determined by the combination of all the real time, historical, and forecasted data weighted accordingly. In various embodiments, a severity level may be associated with the risk indicator 409. In other embodiments, the information about the weather conditions may be transmitted to the oversight system 350 via the V2V 405 and the V2I 402 communication systems.

In some embodiments, the intelligent road network 400 may include an accident risk indicator 415, which indicates that there is a probability of a potential accident/collision in the local segment of the road network. In various embodiments, the vehicle sensor subsystems 144 and/or a roadside unit (RSU) infrastructure 404 with a radius of coverage 411 may provide information about the risk of accident. In some embodiments the roadside unit may use optical or radar based sensing techniques to determine and transmit information about the risk of accident to a Backbone Node (BN) 401 that is also capable to communicate to the oversight system 350. In some embodiments, the Backbone Node 401 and the roadside unit (RSU) infrastructure 404 may also communicate directly with existing infrastructures, such as GSM, UMTS or WiMAX networks.

The BNs may be interconnected to form a Backbone Network. The BN 401 may also form a communicate link 402 with the AVs within its coverage zone. Furthermore, the communicate link 402 may carry critical messages 403 that exhibit low-latency and/or high data rate. In some embodiments, the communicate link 402 may be mmWave communications channel configured to provide wide spectral resources, and thus much higher data rates and lower message latencies. In some embodiments, the information about the risk of accident collected by the vehicle sensor subsystems 144 may also be transmitted to the oversight system 350 through the V2V networking systems, which are in turn connected to RSUs or BNs. In other embodiments, the accident risk indicator 415 may have an associated severity level that may be determined based on current and historical risk of accidents. In some embodiments, the historical risk of accidents may be determined from the accident data comprising police report data.

The intelligent road network 400 may also include a congestion risk indicator 413 at a bottleneck. In some embodiments, the congestion risk indicator 413 may have an associated probability of potential congestion during the time period the AV is scheduled to drive through the congested area. In one embodiment, the BN 401 may provide information about the risk of congestion based on optical or radar sensors. In another embodiment, the V2V communication system 405 may provide information about the risk of congestion based on the spacing between the vehicles and their speed. In other embodiments, the congestion risk indicator 413 may be determined based on the historic and/or current/forested condition(s) of the bottleneck. In some embodiments, the bottleneck may be an intersection 407 with a fixed physical capacity of vehicles per minute. In other embodiments, the bottleneck may be an on/off ramp or a section of a highway.

In various embodiments, the intelligent road network 400 may include a road work risk indicator 407 in areas that may have a current or forecasted road construction. Moreover, the road work risk indicator 407 be also include the severity of the risk of collision for a Class-8 Vehicle due to width/length limitations on a road under construction. The width/length parameters may be communicated to the oversight system 350 from the BN 401 or from the V2V networking system 405.

In some embodiments, the intelligent road network 400 may include a theft risk indictor 417 for areas known for theft from Class-8 Vehicles. For example, in the intelligent road network 400, areas with historically high rates of theft from parked tractor-trailers may have a severe theft risk indicator 417 associated with them. The historical data may indicate the days of the week or times of day when such thefts have occurred. In some embodiments, the oversight system 350 may generate feasible routes with associated track stops, weight stations, or fueling/charging stations with lower risk of theft.

In some embodiments, the intelligent road network 400 may include a road hazard indicator 418 for areas known to be contain road hazard for Class-8 Vehicles. Hazardous segments of the road network 400 may have narrow lanes, sharp bends, blind junctions, etc.

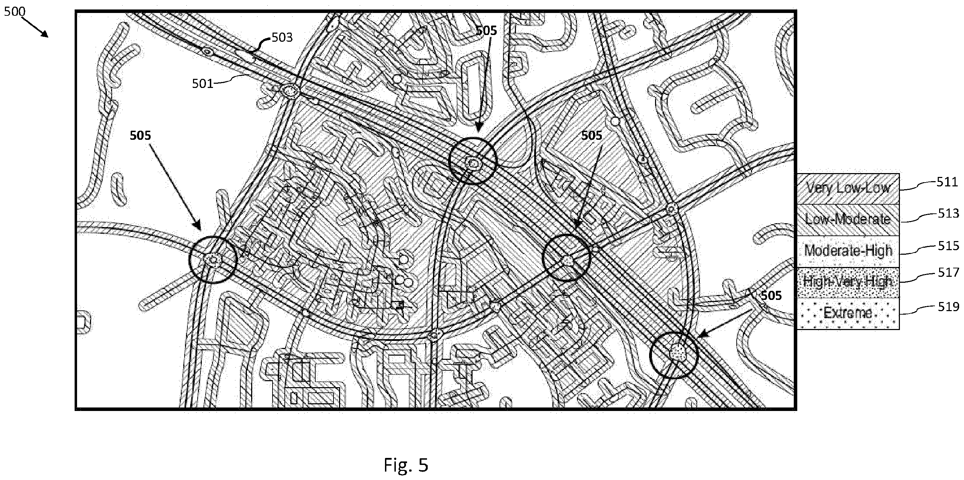

Fig 5. illustrates a two-dimensional road network map 500 with a dynamic risk layer, in accordance with some embodiments. In some embodiments, road segments, intersections, truck stops, weight stations, or fueling/charging stations of the road network map 500 may have risk levels 511, 513, 515, 517 or 519 assigned from a risk severity matrix. For example, the intersections 505 may have the extreme risk level 519 assigned due to the expected severe congestion or collision risk at the intersection 505. In some embodiments, the assigned risk severity may be a weighted average of various risks (e.g., congestion, collision, road construction weather, etc.) present in the road segment. In some embodiments, a continuous segment of the road network may have an assigned a risk. For example, a highway segment 501 may have the Very Low-Low risk severity 511 assigned. In other embodiments, a discrete area 503 of the highway segment may have the Extreme risk 519 due to the historically high probability of an accident.

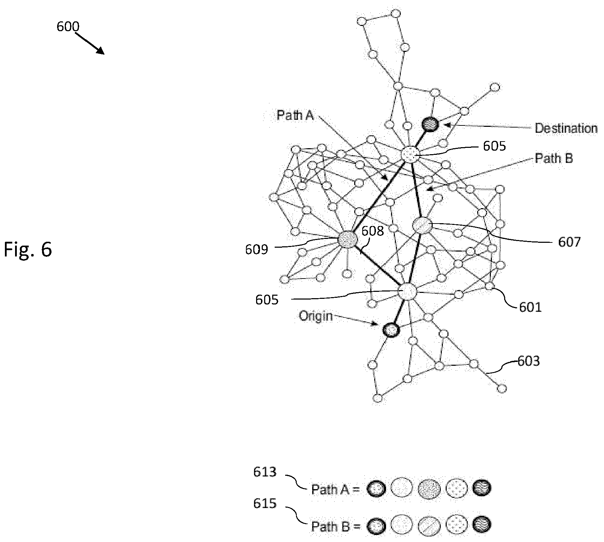

Fig. 6 depicts an undirected graph 600 modeling the two dimensional road network shown in Fig. 5 in accordance with some embodiments. In some embodiments, the undirected graph 600 includes nodes 601 and edges 603. In various embodiments, the nodes 601 represent interactions or on/off ramps of the highway and the edges 603 represent the road segments connecting the intersections or on/off ramps. In some embodiments, the edges 603 may have weights associated with them. The weights assigned to the edges 603 may represent the monetary cost or the travel time associated with each edge. In some embodiments, the undirected graph 600 may include possible routes 613 and 615 connecting the Origin and the Destination nodes. In some embodiments, the routes 613 and 615 may have shared nodes 605. In one embodiment, the route 613 may have higher aggregate risk in comparison to and the route 615 due to the node 609 having higher risk (High-Very High) than the node 607 (Moderate-High). In some embodiments, the route 615 may have lower local risk levels on each node and edge than the local risk levels on each node and edge comprising the route 613. In some embodiments, the edges 601 may also have an associated risk representing the aggregate or the expected risk along the road segment connecting two nodes. For example, an edge 608 may have an associated risk level representing the expected risk at the time AV is scheduled to travel through the edge 608. In various implementations, the risk level associated with an edge or a node may be an aggregate of various risks (e.g., accident, weather, theft, etc.) that may be present along the road segment represented by the edge or the node. In some embodiments, the oversight system 350, may select from feasible routes an optimal route that minimizes or maximizes the third-party's preference(s) (e.g., fuel economy, travel time, etc.).

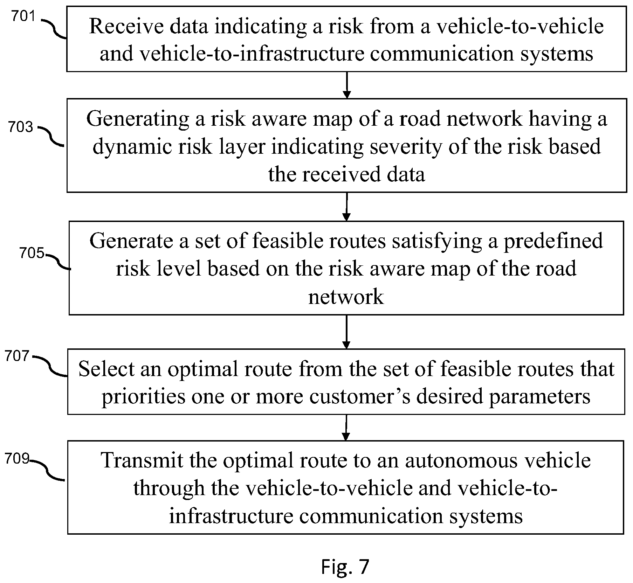

FIG. 7 illustrates a flowchart for generating an optimal route for the AV by the oversight system 350. In some embodiments, at step 701, the oversight system 350 may receive date indicating risk from the V2V and/or V2I communication systems. For example, the received data may comprise information collected by the vehicle sensor subsystems 144 and/or the sensors (e.g., cameras, radars, LIDARS, etc.) available on the RSU infrastructure 404. In some embodiments, the received data may include indications about the current state of the environment surrounding to a road segment. The state of the environment may include collisions, weather conditions, road construction, etc. present on the road segment. In some embodiments, the received data may also include historical data indicating the state of the environment over a day, weeks, or months.

At step 703, the oversight system 350 may generate a risk aware map based on the received data indicating risk on each road segment of the road segment. For example, the risk aware map may include a risk layer indicating a severity of the risk on the road segment. In some embodiments, the risk layer can be dynamically updated.

At step 705, the oversight system 350 may generate a set of feasible routes connecting the origin and the destination and satisfying a predetermined risk level. For example, a route may be included in the feasible set if the aggregate risk on the entire route is below a predetermined global risk level. In another embodiments, a route may be included in a feasible set if the risk on each segment of the route is below a predetermined local risk level.

At step 707, the oversight system 350 may determine an optimal route from the set of feasible routes that meets one or more priorities. In some embodiments, the one or more priorities may be specified by a third-party. In various embodiments, the one or more priorities may include the travel time or the fuel efficiency of the trip.

At step 709, the oversight system 350 may transmit the optimal route via the vehicle-to-vehicle and vehicle-to-infrastructure communication systems to an autonomous vehicle. In some embodiments, the optimal route may be included in the critical messages 403 to exhibit low-latency and high data rate. In one embodiment, the oversight system 350 may transmit a directed or undirected graph representing the optimal route.

Optionally, the optimal route may be transmitted as optimal routing instructions to the vehicle control subsystem. The vehicle control subsystem may be configured to cause the autonomous vehicle to operate according to a determined course of action. The determined course of action may be based on the optimal routing instructions. For example, the vehicle control subsystem may update the driving path while the autonomous vehicle is in operation to follow the optimal route. This allows the autonomous vehicle to operate without a driver or to provide driver assistance. In some implementations, the vehicle control system may include various elements such as an engine power output subsystem, a brake unit, a navigation unit, a steering system, and an autonomous control unit. In controlling the AV based on the optimal routing instructions, the vehicle control subsystem may take any of the actions, or control any of its sub-components, in any of the ways described herein. For example, based on the optimal routing instructions, the vehicle control subsystem may control the operation of the engine, control the gear selection of the transmission, decelerate the autonomous vehicle, etc.

Though much of this document refers to an autonomous truck, it should be understood that any autonomous ground vehicle may have such features. Autonomous vehicles which traverse over the ground may include: semis, tractor-trailers, 18 wheelers, lorries, class 8 vehicles, passenger vehicles, transport vans, cargo vans, recreational vehicles, golf carts, transport carts, and the like.

While several embodiments have been provided in this disclosure, it should be understood that the disclosed systems and methods might be embodied in many other specific forms without departing from the spirit or scope of this disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of this disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the spirit and scope disclosed herein.

The following numbered items are disclosed herein.
1.An autonomous vehicle (AV) route planning method, comprising:
   receiving data indicating a risk on each of road segments of a road network;
   generating a risk aware map of the road network having a dynamic risk layer determined by the received data on the each of the road segments of the road network;
   generating a set of feasible routes between an origin and destination,
   wherein each route in the set of feasible route has an overall risk below a predetermined risk level; selecting an optimal route between the origin and destination from the set of feasible routes, wherein the optimal route prioritizes one or more desired parameters; and
   transmitting the optimal route to the AV. Optionally, transmitting the optimal route to the AV enables a vehicle control subsystem of the AV to control operation of the AV based on the optimal route.
2. The method of item 1, wherein the overall risk is a weighted aggregate risk on each of the road segments comprising each route in the set of feasible routes.
3. The method of item 1, the optimal route is transmitted to the AV through vehicle-to-vehicle or vehicle-to-infrastructure communication systems.
4.The method of item 1, wherein the one or more desired parameters are selected by a third party.
5. The method of item 1, wherein the data indicating the risk is received from vehicle-to-vehicle or vehicle-to-infrastructure communication systems.
6.The method of item 1, wherein the dynamical layer includes a level of severity of the risk on each of the road segments, wherein the level of severity is selected from a matrix of risk severities.
7.An autonomous vehicle (AV) route planning system, comprising:
   a receiver configured to receive data indicating a risk on each of road segments of a road network;
   a mapper configured to generate a risk aware map of the road network having a dynamic risk layer determined by the received data on each of the road segments of the road network;
   an optimizer configured to determine a set of feasible routes between an origin and destination and to select an optimal route from the set of feasible routes,
   wherein each route in the set of feasible route has an overall risk below a predetermined risk level and the optimal route prioritizes one or more desired parameters; and
   a transmitter configured to transmit the optimal route to the AV. Optionally, transmitting the optimal route to the AV enables a vehicle control subsystem of the AV to control operation of the AV based on the optimal route.
8.The system of item 7, wherein the optimal route is transmitted to the AV through vehicle-to-vehicle or vehicle-to-infrastructure communication systems.
9.The system of item 7, wherein the optimal route is transmitted as an undirected graph representing the optimal route.
10.The system of item 7, wherein the one or more desired parameters are selected by a third party.
11. The system of item 7, wherein the one or more desired parameters cause the optimizer to minimize a fuel consumption of the AV.
12. The system of item 7, wherein the one or more desired parameters cause the optimizer to minimize travel time of the AV.
13. The system of item 7, wherein the dynamical risk layer includes a level of severity of the risk on each of the road segments, wherein the level of severity is selected from a matrix of risk severities.
14.The system of item 7, wherein the data indicating the risk is received from vehicle-to-vehicle or vehicle-to-infrastructure communication systems.
15. An autonomous vehicle (AV) comprising:
   a vehicle sensor subsystem,
   wherein the vehicle sensor subsystem senses the current environmental conditions surrounding a road segment;
   a storage device for adding the current environmental conditions to a database of historical environmental conditions previously sensed of the road segment;
   a transmitter configured to transmit the database of historical environmental conditions to an oversight system; and
   a receiver configured to receive, from the oversight system, an optimal routing instruction specifying a path between an origin and destination,
   wherein the optimal routing instruction is selected from a set of routing instructions that have an overall risk the path between the origin and destination below a predetermined risk level.
16.The AV of item 15, wherein the sensing of the current environmental conditions further comprise of detecting an accident, adverse weather, or work construction.
17.The AV of item 15, wherein the transmitter transmits the database of historical environmental conditions through a roadside infrastructure unit or a vehicle-to-vehicle communication system.
18.The AV of item 15, wherein the receiver receives the optimal route through a roadside infrastructure unit or a vehicle-to-vehicle communication system.
19.The AV of item 15, wherein the optimal routing instruction minimize a fuel consumption of the AV.
20.The AV of item 15, wherein the optimal routing instruction minimize travel time of the AV.

## Claims

1. An autonomous vehicle (AV) comprising:
a vehicle sensor subsystem,
wherein the vehicle sensor subsystem senses the current environmental conditions surrounding a road segment;
a storage device for adding the current environmental conditions to a database of historical environmental conditions previously sensed of the road segment;
a transmitter configured to transmit the database of historical environmental conditions to an oversight system; and
a receiver configured to receive, from the oversight system, an optimal routing instruction specifying a path between an origin and destination,
wherein the optimal routing instruction is selected from a set of routing instructions that have an overall risk the path between the origin and destination below a predetermined risk level.

2. The AV of claim 1, further comprising a vehicle control subsystem configured to control operation of the AV based on the optimal routing instruction.

3. The AV of claim 2, wherein the vehicle control subsystem comprises at least one of: an engine power output subsystem, a brake unit, a navigation unit, a steering system, or an autonomous control unit.

4. The AV of any preceding claim, wherein the sensing of the current environmental conditions further comprise of detecting an accident, adverse weather, or work construction.

5. The AV of any preceding claim, wherein the transmitter transmits the database of historical environmental conditions through a roadside infrastructure unit or a vehicle-to-vehicle communication system.

6. The AV of any preceding claim, wherein the receiver receives the optimal route through a roadside infrastructure unit or a vehicle-to-vehicle communication system.

7. The AV of any preceding claim, wherein the optimal routing instruction minimize a fuel consumption of the AV.

8. The AV of any preceding claim, wherein the optimal routing instruction minimize travel time of the AV.

9. An autonomous vehicle (AV) route planning method, comprising:
receiving data indicating a risk on each of road segments of a road network;
generating a risk aware map of the road network having a dynamic risk layer determined by the received data on the each of the road segments of the road network;
generating a set of feasible routes between an origin and destination,
wherein each route in the set of feasible route has an overall risk below a predetermined risk level;
selecting an optimal route between the origin and destination from the set of feasible routes,
wherein the optimal route prioritizes one or more desired parameters; and
transmitting the optimal route to the AV.

10. The method of claim 9, wherein the overall risk is a weighted aggregate risk on each of the road segments comprising each route in the set of feasible routes.

11. The method of claim 9 or 10, wherein the one or more desired parameters are selected by a third party.

12. The method of claim 9, 10 or 11, wherein the dynamical layer includes a level of severity of the risk on each of the road segments, wherein the level of severity is selected from a matrix of risk severities.

13. An autonomous vehicle (AV) route planning system, comprising:
a receiver configured to receive data indicating a risk on each of road segments of a road network;
a mapper configured to generate a risk aware map of the road network having a dynamic risk layer determined by the received data on each of the road segments of the road network;
an optimizer configured to determine a set of feasible routes between an origin and destination and to select an optimal route from the set of feasible routes,
wherein each route in the set of feasible route has an overall risk below a predetermined risk level and the optimal route prioritizes one or more desired parameters; and
a transmitter configured to transmit the optimal route to the AV.

14. The system of claim 13, wherein the optimal route is transmitted as an undirected graph representing the optimal route.

15. The system of claim 13 or claim 14, wherein the data indicating the risk is received from vehicle-to-vehicle or vehicle-to-infrastructure communication systems.
